# EUROPÄISCHE PATENTSCHRIFT

(11) **EP 2 175 176 B1**
(45) Veröffentlichungstag und Bekanntmachung des Hinweises auf die Patenterteilung: **15.02.2012**
(21) Anmeldenummer: 09172036.7
(22) Anmeldetag: 02.10.2009
(51) Int. Cl.: F16H 63/36

(54) **Schalteinrichtung für ein Mehrgang-Schaltgetriebe mit einer Verriegelungsvorrichtung**
Shifting device for a multiple gear gearbox with a locking device
Dispositif de commutation pour une boîte de vitesse à plusieurs vitesses doté d'un dispositif de verrouillage

(30) Priorität: 08.10.2008 DE 102008050810
(43) Veröffentlichungstag der Anmeldung: 14.04.2010
(73) Patentinhaber: Getrag Ford Transmissions GmbH, 50735 Köln (DE)
(72) Erfinder: Hegerath, Andreas, 50126, Bergheim (DE); Doelling, Matthias, 51429, Bergisch-Gladbach (DE); Söhnge, Patrick, 42327, Wuppertal (DE)

(56) Entgegenhaltungen:
- EP-A- 0 331 278
- DE-A1- 4 424 543
- US-A- 3 529 487
- US-A- 4 550 628

## Beschreibung

Die Erfindung betrifft eine Schalteinrichtung für ein Mehrgang-Schaltgetriebe, die eine erste bewegbare Schaltgabel und wenigstens eine zweite bewegbare Schaltgabel zum Einlegen von Gängen des Schaltgetriebes sowie eine Verriegelungsvorrichtung umfasst, die dazu dient, dass die Schaltgabeln nicht gleichzeitig jeweils eine Schaltstellung einnehmen und dadurch unbeabsichtigt zwei Gänge gleichzeitig eingelegt sind.

Aus der EP 0 331 278 A2 ist eine Schalteinrichtung für ein Mehrgang-Schaltgetriebe bekannt, die eine erste Schaltgabel und eine zweite Schaltgabel umfasst. Jede Schaltgabel umfasst eine Schaltstange, die parallel zueinander angeordnet sind. Die Schaltgabeln lassen sich dabei in Längsrichtung der Schaltstangen verschieben. Befindet sich eine Schaltgabel dabei in einer Neutralstellung, so ist kein mit dieser Schaltgabel schaltbarer Gang eingelegt. Befindet sich jedoch eine Schaltgabel in einer Schaltstellung, so ist ein der Schaltgabel zugeordneter Gang eingelegt.

Um zu verhindern, dass in dem Mehrgang-Schaltgetriebe zwei Gänge gleichzeitig eingelegt sind, ist eine Verriegelungsvorrichtung vorgesehen, die ein erstes bewegbares Sperrelement aufweist. Das Sperrelement ist rotationssymmetrisch aufgebaut und weist einen zylindrischen Mittelteil und zwei konisch geformte Endbereiche auf. Das Sperrelement ist in einem Sperrkanal verschiebbar angeordnet, wobei der Sperrkanal senkrecht zu den parallel verlaufenden Schaltstangen verläuft. Die Schaltstangen der Schaltgabeln laufen durch den Sperrkanal, wobei sie in Höhe des Sperrkanals eine Aussparung aufweisen. Befinden sich die Schaltgabeln jeweils in ihrer Neutralposition, so lässt sich, bedingt durch die Aussparungen an den Schaltstangen, das Sperrelement entlang des Sperrkanals bewegen. Wird nun beispielsweise die zweite Schaltgabel von ihrer Neutralstellung in eine Schaltstellung verschoben, um einen der zweiten Schaltgabel zugeordneten Gang einzulegen, rückt die Aussparung der Schaltstange der zweiten Schaltgabel aus dem Sperrkanal. Eine Innenwand der Aussparung in der Schaltstange der verschobenen zweiten Schaltgabel wirkt dabei mit einem der beiden konischen Endbereiche des Sperrelementes zusammen, wobei die Innenwand der Aussparung über den konischen Endbereich das Sperrelement entlang des Sperrkanals seitlich wegdrückt. Das Sperrelement greift dabei mit seinem anderen Endbereich in die Aussparung der nicht verrückten, weiterhin in der Neutralstellung befindlichen ersten Schaltgabel. Das Sperrelement ist dabei in dem Sperrkanal durch eine Seitenwand der Schaltstange der verschobenen zweiten Schaltgabel fixiert. Da das Sperrelement nicht entlang des Kanals verschoben werden kann, hält es die erste Schaltgabel in der Neutralposition. Dabei verriegelt eine Anlagefläche des Sperrelementes, welche der Mantelfläche des konischen Endbereichs entspricht, die erste Schaltgabel über die Innenwände der Aussparung der Schaltstange. Eine Innenwand der Aussparung der verriegelten Schaltgabel kann daher auch als Verriegelungsfläche bezeichnet werden. Somit ist in der EP 0 331 278 A2 sichergestellt, dass jeweils nur ein Gang des Mehrgang-Schaltgetriebes eingelegt ist, um einen Getriebeschaden zu vermeiden, der durch zwei unbeabsichtigt gleichzeitig eingelegte Gänge verursacht werden kann.

Bei automatisierten Mehrgang-Schaltgetrieben kann der Fehler auftreten, dass trotz bereits eingelegtem Gang eine andere Schaltgabel über einen fehlgesteuerten Aktuator in Richtung einer Schaltstellung gedrückt wird. Bei der aus der EP 0 331 278 A2 bekannten Schalteinrichtung würde dies dazu führen, dass das Sperrelement im Sperrkanal, das die Bewegung der noch in Neutralstellung befindlichen ersten Schaltgabel in Richtung Schaltstellung verhindert, über den konischen Endbereich seitlich verschoben wird. Da sich das Sperrelement in Längsrichtung des Sperrkanals an der bereits in Schaltstellung befindlichen zweiten Schaltgabel abstützt, führt eine auf die erste Schaltgabel wirkende Kraft zu einem seitlichen Druck der bereits in Schaltstellung befindlichen zweiten Schaltgabel. Aufgrund Actio-Reactio wirkt auf die erste Schaltgabel ebenfalls ein seitlicher Druck. Entsprechend müssen die Schaltgabeln so gelagert sein, dass sie durch das Sperrelement übertragene Seitenkräfte problemlos aufnehmen können. Dies jedoch führt zu einem aufwändigen Aufbau der Schalteinrichtung, der regelmäßig mit höheren Kosten verbunden sein dürfte.

Die US 4,550,628 offenbart eine Schalteinrichtung gemäß dem Oberbegriff des Anspruchs 1. Jedoch müssen auch hier Schaltgabeln durch das Sperrelement übertragene Seitenkräfte aufnehmen können. Die US 3,529,487 offenbart eine Schalteinrichtung mit zwei benachbarten Schaltgabeln, zwischen denen zwei Sperrelemente angeordnet sind, die aber auch zum Teil Seitenkräfte zwischen den Schaltgabeln übertragen.

Der Erfindung liegt daher die Aufgabe zugrunde, eine Schalteinrichtung für ein Mehrgang-Schaltgetriebe bereitzustellen, das einfach aufgebaut ist und das sicher vermeidet, dass zwei Gänge des Schaltgetriebes unbeabsichtigt gleichzeitig eingelegt sind.

Die der Erfindung zugrunde liegende Aufgabe wird durch die Merkmalskombination des Anspruchs 1 gelöst. Bevorzugte Ausführungsbeispiele können den Unteransprüchen entnommen werden.

Bei der erfindungsgemäßen Schalteinrichtung gemäß Anspruch 1 sind die Anlagefläche des ersten Sperrelementes und die Verriegelungsfläche der ersten Schaltstange so ausgebildet, dass in Sperrposition eine Kraft zum Bewegen der ersten Schaltstange aus der Neutralposition heraus keine resultierende Kraftkomponente aufweist, durch die das Sperrelement gegen die verschobene, in Schaltstellung befindliche zweite Schaltgabel gedrückt wird. Vorzugsweise nimmt dabei ein Abstützblock der Verriegelungsvorrichtung die Kräfte auf, die beim Aufbringen der Kraft zum Bewegen der ersten Schaltgabel aus der Neutralposition auf das erste Sperrelement wirken. Durch die vorzugsweise vollständige Aufnahme der Kräfte durch den Abstützblock leitet das erste Sperrelement keine Kräfte auf die zweite Schaltgabel weiter, so dass deren Lagerung für die Aufnahme derartiger Kräfte nicht ausgelegt sein muss. Dies vereinfacht den Aufbau der Schalteinrichtung und ermöglicht eine kostengünstigere Konstruktion.

Die Verriegelungsvorrichtung dient dazu, dass die erste Schaltgabel und zweite Schaltgabel nicht unbeabsichtigt gleichzeitig jeweils ihre Schaltstellung einnehmen und damit zwei Gänge des Mehrgang-Schaltgetriebes eingelegt sind. Die erfindungsgemäße Schalteinrichtung lässt sich auch bei einem Doppelkupplungsgetriebe mit zwei Teilgetrieben einsetzen. Zum Zwecke einer Beschleunigung ohne Zugkraftunterbrechung ist bei einem Doppelkupplungsgetriebe in jedem Teilgetriebe gleichzeitig ein Gang eingelegt. In diesem Fall sieht die Steuerung des Doppelkupplungsgetriebes das gleichzeitige Einlegen von Gängen vor. Bezogen auf ein Teilgetriebe hingegen ist Sorge zu tragen, dass dort nur jeweils ein Gang eingelegt ist. Bei Einsatz der erfindungsgemäßen Schalteinrichtung in einem Doppelkupplungsgetriebe bezieht sich somit die sperrende Wirkung der Verriegelungsvorrichtung nur auf ein Teilgetriebe. Dies schließt natürlich nicht aus, dass für jedes Teilgetriebe des Doppelkupplungsgetriebes jeweils eine erfindungsgemäße Schalteinrichtung vorgesehen ist.

Eine Bewegungsrichtung der ersten Schaltgabel und eine Bewegungsrichtung des ersten Sperrelementes können senkrecht zueinander verlaufen, wobei die Anlagefläche des ersten Sperrelementes und die Verriegelungsfläche der ersten Schaltgabel jeweils senkrecht zu der Bewegungsrichtung der ersten Schaltgabel ausgebildet sind. Greift nun unbeabsichtigt eine Kraft an der ersten Schaltgabel an, um diese entlang der Bewegungsrichtung zu bewegen, wird aufgrund der zu der Bewegungsrichtung der ersten Schaltgabel senkrecht stehenden zusammenwirkenden Flächen (Anlagefläche und Verriegelungsfläche) die Kraft nicht in eine Kraft entlang der Bewegungsrichtung des ersten Sperrelementes umgewandelt. Dies führt dazu, dass auf das Sperrelement in Bewegungsrichtung keine Kräfte wirken, die entsprechend abgefangen werden müssten.

Das Sperrelement kann als Sperrbolzen ausgebildet sein, der mit einem Ende in eine Vertiefung der ersten Schaltgabel greift, wobei eine die Vertiefung begrenzende Innenwand die Verriegelungsfläche ausbildet. Beispielsweise kann die Vertiefung eine im Querschnitt im Wesentlichen rechteckige Nut mit zwei Seitenwänden und einem Nutboden sein. Die sich gegenüberstehenden Seitenwände der Nut bilden dann jeweils eine Verriegelungsfläche aus. Wenn der Sperrbolzen in diese Nut greift, ist die Schaltgabel in zwei Richtungen blockiert. Dadurch lässt sich das unbeabsichtigte Verschieben einer Schaltgabel aus der Neutralstellung in zwei Richtungen sicher vermeiden.

In einem bevorzugten Ausführungsbeispiel ist das erste Sperrelement nicht fixiert, wenn sich neben der in Neutralstellung befindlichen ersten Schaltgabel auch die zweite Schaltgabel in der Neutralstellung befindet. Da erfindungsgemäß vorgesehen ist, dass eine Verschiebung der ersten Schaltgabel aus der Neutralstellung heraus keine Kräfte entstehen lassen soll, durch die das erste Sperrelement entlang seiner Bewegungsrichtung bewegt wird, besteht die Möglichkeit, dass, nachdem durch die zweite Schaltgabel der entsprechende Gang ausgelegt ist, dass erste Sperrelement in seiner Sperrposition, in der es die erste Schaltgabel blockiert, verharrt. Dann kann durch die erste Schaltgabel kein Gang eingelegt werden. Um dies zu vermeiden, weist zweckmäßig die Verriegelungsvorrichtung Mittel auf, die das Sperrelement von der Sperrposition in eine Ruheposition drücken. Befindet sich das Sperrelement in dieser Ruheposition, lässt sich die erste Schaltgabel aus ihrer Neutralstellung bewegen.

Vorzugsweise weist die zweite Schaltgabel eine Steuerfläche auf, an der das Sperrelement in der Ruheposition anliegt, wenn die zweite Schaltgabel sich aus der Neutralstellung bewegt wird, wobei die Steuerfläche eine Bewegung der zweiten Schaltgabel in eine Bewegung des Sperrelementes von der Ruheposition in die Sperrposition umwandelt. Die Steuerfläche dient also dazu, über die Bewegung der zweiten Schaltgabel eine Bewegung des Sperrelements einzuleiten. Damit kommt der Steuerfläche der zweiten Schaltgabel eine Funktion zu, die bei der Verriegelungsfläche der ersten Schaltgabel gerade ausgeschlossen sein soll.

An dieser Stelle sei darauf hingewiesen, dass zwischen der Steuerfläche der zweiten Schaltgabel und dem Sperrelement in Neutralstellung der zweiten Schaltgabel durchaus ein kleiner Spalt gegeben sein kann. Wird jedoch die zweite Schalteinheit aus der Neutralstellung minimal bewegt, schließt sich der Spalt und das erste Sperrelement liegt an der Steuerfläche der zweiten Schaltgabel an. Analoges gilt für die Anlagefläche des Sperrelementes und der Verriegelungsfläche der ersten Schaltgabel: Auch hier kann ein kleiner Spalt gegeben sein, der sich aber sofort schließt, wenn auf die erste Schaltgabel entsprechende Kräfte wirken.

Die zweite Schaltgabel kann eine Blockierfläche aufweisen, an der das erste Sperrelement anliegt, wenn es sich in der Sperrposition befindet. Somit gibt die zweite Schaltgabel über die Blockierfläche eine definierte Position des ersten Sperrelementes vor, wodurch dann die erste Schaltgabel in ihrer Neutralstellung verriegelt ist.

Bei seiner Bewegung von der Ruheposition zur Sperrposition wirkt das Sperrelement gemäß dem oben beschriebenen Ausführungsbeispiel erst mit der Steuerfläche und dann mit der Blockierfläche der zweiten Schaltgabel zusammen. Dabei können Steuerfläche, Blockierfläche und Sperrelement so ausgelegt sein, dass die Blockierfläche bei Bewegung des Sperrelementes dann in Eingriff kommt, wenn das Sperrelement die Sperrposition gerade erreicht hat, also wenn Anlagefläche des Sperrelementes und Verriegelungsfläche der ersten Schaltgabel in Eingriff kommen.

In einer erfindungsgemäßer Alternative befindet sich das erste bewegbare Sperrelement, wenn durch die erste Schaltgabel ein anderer Gang eingelegt ist und nun die zweite Schaltgabel in ihrer Neutralposition liegt, in einer durch die erste Schaltgabel fixierten Sperrposition, in der eine weitere Anlagefläche des ersten Sperrelementes und eine Verriegelungsfläche der zweiten Schaltgabel zusammenwirken, wobei die weitere Anlagefläche des ersten Sperrelementes und die Verriegelungsfläche der zweiten Schaltgabel so ausgebildet sind, dass in Sperrposition eine Kraft zum Bewegen der zweiten Schaltgabel aus der Neutralposition heraus keine resultierende Kraftkomponente aufweist, durch die das erste Sperrelement gegen die zweite Schaltgabel gedrückt wird. Somit sorgt das erste Sperrelement für eine gegenseitige Verriegelung der ersten und zweiten Schaltgabel. Ist durch die erste Schaltgabel ein Gang eingelegt, so ist die zweite Schaltgabel in ihrer Neutralstellung blockiert. Umgekehrt führt ein durch die zweite Schaltgabel eingelegter Gang zu einer Festlegung der ersten Schaltgabel in ihrer Neutralstellung. In beiden Fällen führt aufgrund der Ausbildung der Anlageflächen des ersten Sperrelementes eine unbeabsichtigte Bewegung der in Neutralstellung befindlichen Schaltgabel nicht zu einer Kraftbeaufschlagung der in der Schaltstellung befindlichen Schaltgabel. Das Sperrelement ist somit hinsichtlich der ersten Schaltgabel und der zweiten Schaltgabel vorzugsweise symmetrisch aufgebaut. Dies gilt auch für die Schaltgabeln mit ihren Verriegelungsflächen und Steuerflächen, die vorzugsweise für die Schaltgabeln jeweils gleich ausgebildet sind. Somit lässt sich eine identische Sperrwirkung für beide Schaltgabeln erreichen.

Alternativ weist die Verriegelungsvorrichtung erfindungsgemäß ein zweites Sperrelement auf, dass sich, wenn durch die erste Schaltgabel ein Gang eingelegt ist, in einer durch die erste Schaltgabel fixierte Sperrposition befindet, in der eine Anlagefläche des zweiten Sperrelements und die Verriegelungsfläche der zweiten Schaltgabel zusammenwirken und dadurch die zweite Schaltgabel in Neutralstellung gehalten wird, wobei die Anlagefläche des zweiten Sperrelementes und die Verriegelungsfläche der zweiten Schaltgabel so ausgebildet sind, dass in Sperrposition eine Kraft zum Bewegen der zweiten Schaltgabel aus der Neutralposition heraus keine resultierende Kraftkomponente aufweist, durch die das zweite Sperrelement gegen die erste Schaltgabel gedrückt wird. Bei dieser Alternative ist jeweils ein Sperrelement zum Verriegeln einer Schaltgabel in ihrer Neutralstellung verantwortlich. Während das erste Sperrelement für die Verriegelung der ersten Schaltgabel zuständig ist, ist das zweite Sperrelement für die Verriegelung der zweiten Schaltgabel in ihrer Neutralstellung vorgesehen. Zwar sind dadurch zwei voneinander unabhängige Sperrelemente notwendig, doch aufgrund ihrer nur auf eine Schaltgabel gerichtete Funktion lassen sie sich jeweils einfacher gestalten und lagern. Auch lassen sich durch die Verwendung von zwei Sperrelementen in einfacher Weise Steuerfläche und Verriegelungsfläche räumlich voneinander trennen und dadurch unabhängig voneinander gestalten (zum Beispiel hinsichtlich Toleranzauslegung).

Die Mittel, die das erste Sperrelement und/oder das zweite Sperrelement aus der jeweiligen Sperrposition in die Ruheposition drücken, können eine Feder umfassen, die sich vorzugsweise an dem Abstützblock der Verriegelungseinrichtung abstützt. Die Feder kann zum Beispiel eine Schenkelfeder mit zwei zueinander beabstandeten Schenkeln sein. Die Schenkel können jeweils eine offene Aufnahme aufweisen, in die das Sperrelement eingelegt werden kann. Das Sperrelement lässt sich dann gegen die Spannkraft der Schenkelfeder ausgehend von der Ruheposition in die Sperrposition oder in die Sperrpositionen verschieben.

Alternativ kann die Feder auch als Schraubenfeder ausgebildet sein, durch die das erste Sperrelement und/oder das zweite Sperrelement in die Ruheposition gedrückt wird.

Anhand der in der Zeichnung dargestellten Ausführungsbeispiele wird die Erfindung näher erläutert. Es zeigen:
- Figur 1: schematisch Teile einer Schalteinrichtung gemäß dem Stand der Technik;
- Figur 2: schematisch Teile eines ersten Ausführungsbeispiels der Erfindung in verschiedenen Stellungen;
- Figur 3: eine Schenkelfeder gemäß dem Ausführungsbeispiel der Figur 2;
- Figur 4: ein Sperrelement gemäß dem Ausführungsbeispiel der Figur 2; und
- Figur 5: schematisch Teile eines zweiten Ausführungsbeispiels der Erfin- dung.

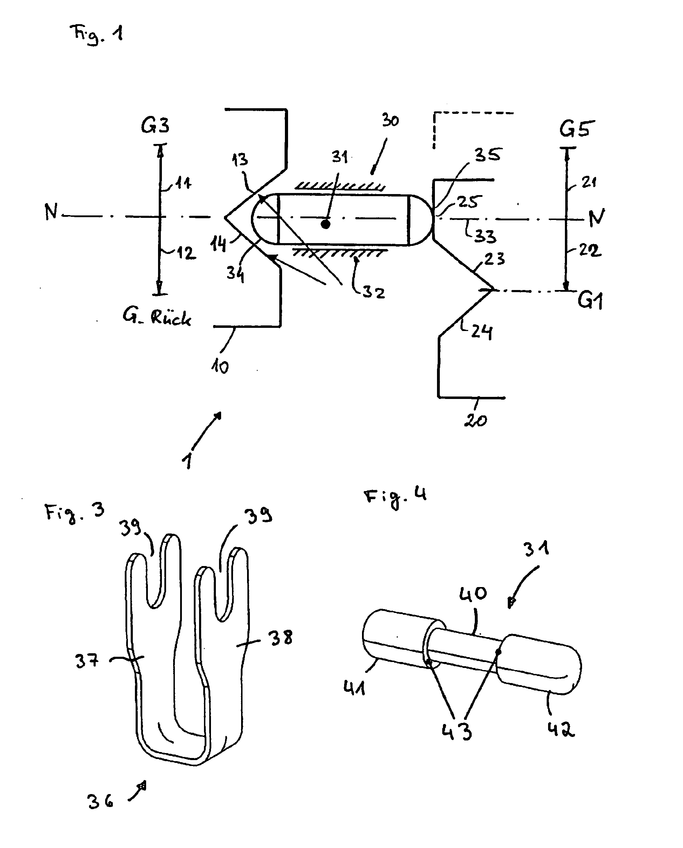

Figur 1 zeigt schematisch Teile einer Schaltvorrichtung gemäß dem Stand der Technik. Eine erste Schaltgabel 10, die nur ausschnittsweise dargestellt ist, lässt sich ausgehend von einer Neutralstellung N in Richtung der Pfeile 11, 12 bewegen.

Neben der ersten Schaltgabel 10 ist eine zweite Schaltgabel 20 (nur ausschnittsweise dargestellt) angeordnet, die parallel zur ersten Schaltgabel 10 entlang der Pfeile 21, 22 verschoben werden kann. In einem Mehrgang-Schaltgetriebe, in dem die Schalteinrichtung eingebaut sein soll, können den Schaltgabeln 10, 20 jeweils zwei Gänge zugeordnet werden. Insbesondere soll es sich bei dem Mehrgang-Schaltgetriebe um ein Teilgetriebe eines Doppelkupplungsgetriebes handeln, in dem ungerade Vorwärtsgänge G1, G3, G5 und ein Rückwärtsgang G_Rück realisiert sind. Die zweite Schaltgabel 20 befindet sich in einer Schaltstellung, in der der Vorwärtsgang G1 eingelegt ist. Die anderen in der Figur 1 dargestellten Gänge sind dabei nicht eingelegt. Die erste Schaltgabel 10 sowie die zweite Schaltgabel 20 umfassen einen hier nicht dargestellten Gabelteil, der jeweils eine Schiebemuffe im Schaltgetriebe axial verschieben kann. Durch die axiale Verschiebung einer Schiebemuffe lässt sich eine drehfeste Verbindung zwischen einem Losrad und einer Welle des Schaltgetriebes herstellen, auf der sowohl die Schiebemuffe als auch das Losrad angeordnet sind. Bei drehfester Verbindung zwischen Losrad und Schiebemuffe ist ein dem Losrad zugeordneter Gang des Schaltgetriebes eingelegt.

Zwischen der ersten Schaltgabel 10 und der zweiten Schaltgabel 20 ist eine Verriegelungsvorrichtung 30 angeordnet, die ein erstes Sperrelement 31 umfasst. Des Weiteren umfasst die Verriegelungsvorrichtung 30 einen Abstützblock 32, der in der Figur 1 aber nur stark schematisiert dargestellt ist. Der Abstützblock 32 sorgt für eine verschiebbare Lagerung des Sperrelementes 31 entlang einer Achse 33. Die Achse 33 verläuft senkrecht zu den Bewegungsrichtungen 11, 12, 21, 22 der Schaltgabeln 10, 20.

Das Sperrelement 31 weist endseitig Anlageflächen 34, 35 auf, die in etwa die Form einer Halbkugel haben. Die Anlagefläche 34 des Sperrelementes 31 wirkt mit Verriegelungsflächen 13, 14 der ersten Schaltgabel 10 zusammen. In analoger Weise wie die erste Schaltgabel 10 weist auch die zweite Schaltgabel 20 Verriegelungsflächen 23, 24 auf. Wird beispielsweise versucht, die erste Schaltgabel 10 aus der Neutralstellung N in Richtung 11 zu verschieben, wodurch dann der Vorwärtsgang G3 eingelegt würde, drückt die Verriegelungsfläche 14 gegen die Anlagefläche 34 des ersten Sperrelementes 31. Da sich das erste Sperrelement 31 mit seiner Anlagefläche 35 an einer Blockierfläche 25 an der zweiten Schaltgabel 20 abstützt und die Schaltgabel 20 in Richtung der Achse 33 nicht nachgibt, kann sich das erste Sperrelement 31 nicht bewegen, so dass die erste Schaltgabel 10 in der Neutralstellung N bzw. in unmittelbarer Nähe davon verriegelt ist. Jedoch führt die Schaltkraft, um die erste Schaltgabel 10 aus der Neutralstellung N zu verschieben, aufgrund der zur Achse 33 geneigten Verriegelungsflächen 13, 14 zu seitlichen Querkräften, die einerseits die erste Schaltgabel 10 und auch die zweite Schaltgabel 20 betreffen. So drückt das erste Sperrelement 31 mit seiner Anlagefläche 35 seitlich auf die zweite Schaltgabel 20. Dies betrifft auch die erste Schaltgabel 10, die entsprechende Reaktionskräfte aufnehmen muss.

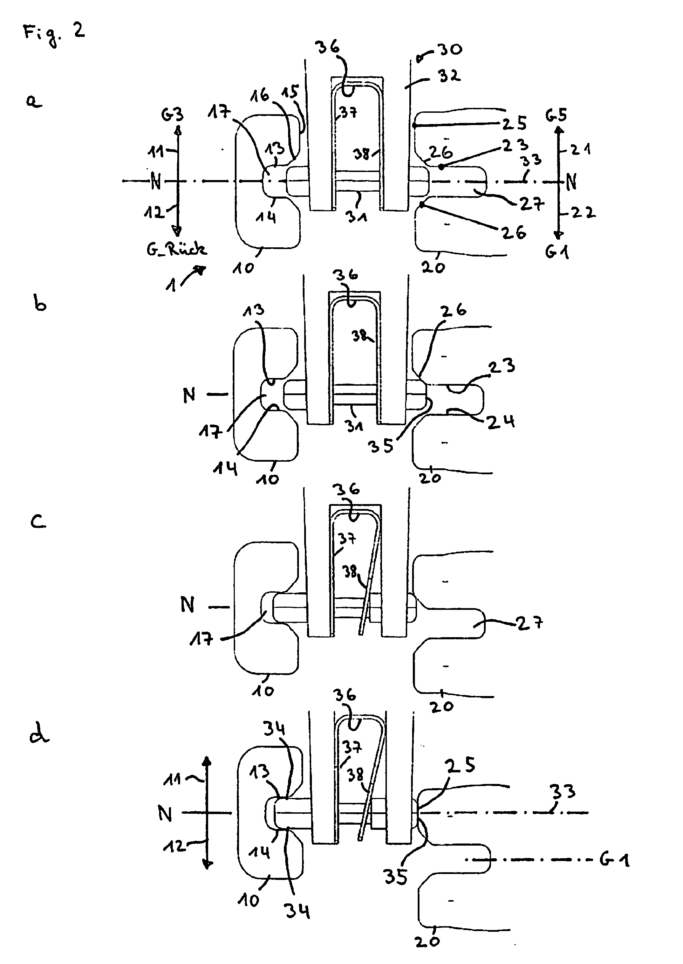

Während Figur 1 Teile einer Schalteinrichtung1 gemäß dem Stand der Technik zeigt, zeigt Figur 2 Teile eines ersten Ausführungsbeispiels der Erfindung. Figur 2 zeigt wie Figur 1 eine erste Schaltgabel 10, eine zweite Schaltgabel 20 sowie eine Verriegelungsvorrichtung 30. Für die zweite Schaltgabel 20 werden in Figur 2 unterschiedliche Stellungen dargestellt, nämlich in Figur 2a eine Neutralstellung N und in Figur 2d eine Schaltstellung, in der ein Vorwärtsgang G1 eines Mehrgang-Schaltgetriebes eingelegt sein soll. Die Figuren 2b und 2c zeigen Stellungen der zweiten Schaltgabel 20, die auf dem Weg von der Neutralstellung N in die Schaltstellung, bei der der Vorwärtsgang G1 eingelegt ist, durchlaufen werden.

Bauteile, Bezeichnungen und Merkmale, die zu denen der Figur 1 identisch oder ähnlich sind, werden in Figur 2 mit gleichen Bezugszeichen belegt. Entsprechendes gilt für die Figuren 3 bis 5, auf die später noch näher eingegangen wird.

Die in Figur 2d dargestellte Schaltstellung der zweiten Schaltgabel 20 korrespondiert mit der in Figur 1 dargestellten Schaltstellung der dortigen zweiten Schaltgabel 20. Wie auch bei der Schalteinrichtung der Figur 1 lassen sich durch das erste Ausführungsbeispiel gemäß Figur 2 ebenfalls drei Vorwärtsgänge G1, G3, G5 und ein Rückwärtsgang G_Rück (siehe Figur 2a) einlegen. Beispielsweise ist das Mehrgang-Schaltgetriebe ein Teilgetriebe eines Doppelkupplungsgetriebes mit sechs Vorwärtsgängen und einem Rückwärtsgang, wobei die geraden Vorwärtsgänge in einem anderen Teilgetriebe des Doppelkupplungsgetriebes untergeordnet sind. Bezüglich der Verschiebbarkeit der Schaltgabeln 10, 20 sowie der einzelnen Gänge, die durch das Verschieben der Schaltgabeln 10, 20 eingelegt werden können, wird auf die Beschreibung zu Figur 1 verwiesen.

Ein Sperrelement 31 ist entlang einer Achse 33 verschiebbar angeordnet, die senkrecht zu den Bewegungsrichtungen 11, 12, 21, 22 verläuft, entlang derer sich die Schaltgabeln 10, 20 verschieben lassen. Das Sperrelement 31 ist in einem U-förmigen Abstützblock 32 verschiebbar gelagert. In dem U-förmigen Abstützblock 32 ist eine ebenfalls U-förmige Schenkelfeder 36 eingesetzt, die gesondert in perspektivischer Ansicht der Figur 3 zu entnehmen ist. Die U-förmige Schenkelfeder 36 weist zwei zueinander beabstandete Schenkel 37, 38 auf, die jeweils endseitig eine offene, gabelförmige Aufnahme 39 für das Sperrelement 31 ausbilden. In diese Aufnahmen 39 lässt sich das Sperrelement 31 von oben in die Schenkelfeder 36 einsetzen.

Die in der Figur 2a gezeigte Stellung des Sperrelementes 31 soll eine Ruheposition des Sperrelementes 31 sein. Wird das Sperrelement 31 aus dieser Ruheposition bewegt, wird die Schenkelfeder 36 elastisch verformt. So wird der Schenkel 38 in Richtung des anderen Schenkels 37 verbogen, wenn die zweite Schaltgabel 20 von der Neutralstellung in die Schaltstellung geschoben wird, in der der Vorwärtsgang G1 eingelegt ist.

Wie insbesondere Figur 4 zu entnehmen ist, welche das Sperrelement 31 in perspektivischer Ansicht zeigt, ist das Sperrelement 31 rotationssymmetrisch ausgebildet und weist einen mittleren Bereich 40 auf, der gegenüber den Endbereichen 41, 42 im Durchmesser kleiner ausgeführt ist. Dadurch entsteht beim Übergang vom mittleren Bereich 40 zu den Endbereichen 41, 42 jeweils ein ringförmiger Absatz 43, der in Einbaulage an den Schenkeln 37, 38 der Schenkelfeder 36 anliegt. Durch den Absatz 43 wird beim Verschieben des Sperrelementes 31 einer der Schenkel 37, 38 der Schenkelfeder 36 mitgenommen (siehe Figur 2c, 2d).

Im Gegensatz zum Stand der Technik gemäß Figur 1 sind Verriegelungsflächen 13, 14 der ersten Schaltgabel 10 so ausgebildet, dass bei eingelegtem Vorwärtsgang G1 (siehe Figur 2d) eine Kraft zum Verschieben der ersten Schaltgabel 10 aus der Neutraistellung N in Richtung 11 oder 12 keine Kraftkomponente auf das Sperrelement 31 entwickelt, durch die das Sperrelement 31 in Richtung der zweiten Schaltgabel 20 gedrückt wird. Sowohl die Verriegelungsflächen 13, 14 als auch die in Figur 2d wirksame Anlagefläche 34 des Sperrelementes 31 verlaufen alle senkrecht zu den Bewegungsrichtungen 11, 12. Somit kann keine Kraft in Richtung der Achse 33 auf das Sperrelement 31 übertragen werden.

Wird nun ausgehend von der Neutralstellung N die zweite Schaltgabel 20 in die in Figur 2d dargestellte Schaltstellung bewegt, kommt die Anlagefläche 35 des Sperrelementes 31 mit einer Steuerfläche 26 der zweiten Schaltgabel 20 in Kontakt. Da die Steuerfläche 44 gegenüber den Bewegungsrichtungen 21, 22 der zweiten Schaltgabel 20 bzw. gegenüber der Bewegungsachse 33 des ersten Sperrelementes 31 geneigt ausgebildet ist, führt die weitere Bewegung der zweiten Schaltgabel 20 in Richtung Schaltstellung zu einer Verschiebung des Sperrelementes 31. Somit wird das Sperrelement 31 aus der in der Figur 2a dargestellten Ruheposition in eine Sperrposition verschoben, wie sie in Figur 2d dargestellt ist. In dieser Sperrposition ist, wie oben bereits beschrieben, die Schenkelfeder 36 elastisch verformt, so dass die Schenkelfelder 36 das Sperrelement 31 wieder in Richtung Ruheposition drückt. Jedoch stützt sich das Sperrelement 31 mit der Anlagefläche 35 an einer Blockierfläche 25 der zweiten Schaltgabel 20 ab.

Wie der Figur 2 zu entnehmen ist, sind die Schaltgabeln 10, 20 hinsichtlich einer Vertiefung 17, 27, die die entsprechenden Verriegelungsflächen 13, 14, 23, 24 sowie die Steuerflächen 16, 26 ausbilden, identisch ausgebildet. Da auch Sperrelement 31 hinsichtlich seiner Endbereiche 41, 42 identisch aufgebaut ist, ergeben sich bei unterstellter Ausgangslage gemäß Figur 2a beim Verschieben der ersten Schaltgabel 10 aus der Neutralstellung N heraus die sinngemäß gleichen Zusammenhänge, wie sie beim Verschieben der zweiten Schaltgabel 20 oben beschrieben sind. Entsprechend wird das Sperrelement 31 aus der in Figur 2a dargestellten Ruheposition in eine Sperrposition verschoben. Im Falle, dass die erste Schaltgabel 10 in eine Schaltstellung überführt worden ist, würde dann das Sperrelement 31 in die Nut 27 der zweiten Schaltgabel 20 greifen und diese in ihrer Neutralstellung N blockieren.

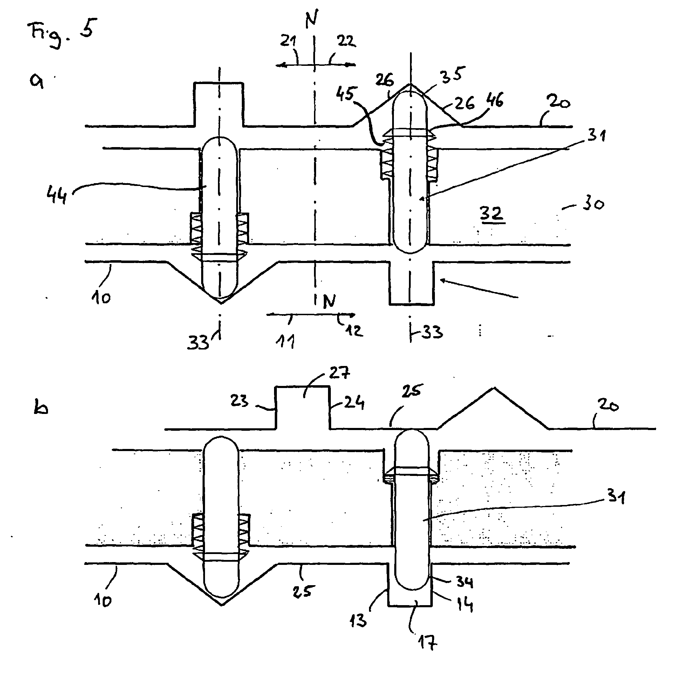

Figur 5 zeigt Teile eines zweiten Ausführungsbeispiels der Erfindung. Dargestellt sind ausschnittsweise eine erste Schaltgabel 10 und eine zweite Schaltgabel 20, die sich in Bewegungsrichtungen 11, 12 bzw. 21, 22 verschieben lassen, um einen Gang des Mehrfach-Schaltgetriebes einzulegen, in dem die erfindungsgemäße Schalteinrichtung Verwendung findet. Figur 5a zeigt die Schaltgabeln 10, 20 jeweils in ihrer Neutralstellung N. Zwischen den Schaltgabeln 10, 20 ist eine Verriegelungsvorrichtung 30 angeordnet, die ein erstes Sperrelement 31 und ein zweites Sperrelement 44 aufweist. Die Sperrelemente 31, 44 sind identisch aufgebaut, so dass im Folgenden nur auf das erste Sperrelement 31 Bezug genommen wird. Das Sperrelement 31 weist eine im Wesentlichen halbkugelförmige Anlagefläche 34 auf, die an Steuerflächen 26 der zweiten Schaltgabel 20 anliegen. Die Steuerflächen 26 sind gegenüber den Bewegungsrichtungen 21, 22 der zweiten Schaltgabel 20 sowie einer Achse 33, entlang derer das erste Sperrelement 31 verschiebbar durch einen Abstützblock 32 gehalten wird, geneigt ausgebildet. Beim Verschieben der zweiten Schaltgabel 20 aus ihrer Neutralstellung N heraus wird somit über die Steuerfläche 26 das erste Sperrelement 31 entlang der Achse 33 in Richtung der ersten Schaltgabel 10 bewegt, wobei das erste Sperrelement 31 in eine Vertiefung oder Nut 17 der ersten Schaltgabel 10 greift (siehe Figur 5b). Diese Nut 17 weist zwei gegenüberliegende Seitenwände 13, 14 auf, die die Verriegelungsflächen darstellen, durch die verhindert wird, dass sich die in Neutralstellung N befindliche erste Schaltgabel 10 aus dieser Neutralstellung N bewegen lässt. Auch hier erstrecken sich die Verriegelungsflächen 13, 14 sowie die wirksame Anlagefläche 34 senkrecht zu den Bewegungsrichtungen 11, 12, 21, 22 der Schaltgabeln 10, 20. Beim Verschieben des Sperrelementes 31 von der Ruheposition (siehe Figur 5a) in die Sperrposition (siehe Figur 5b) wird eine Schraubenfeder 45 elastisch verformt, die sich einerseits am Abstützblock 32 und andererseits an einem Teller 46 abstützt, der fest auf dem Sperrelement 31 sitzt.

Auch die zweite Schaltgabel 20 weist eine Nut 27 mit sich gegenüberstehenden Innenwänden 23, 24 auf, die für die Verriegelung der zweiten Schaltgabel sorgen, wenn sich diese in Neutralstellung N befindet und die erste Schaltgabel 10 sich in einer Schaltstellung befindet, in der eine der ersten Schaltgabel 10 zugeordneter Gang eingelegt ist.

Im zweiten Ausführungsbeispiel gemäß der Figur 5 sind für beide Schaltgabeln 10, 20 die Steuerflächen 16 und die Verriegelungsflächen 13, 14 bzw. die Steuerflächen 26 und die Verriegelungsflächen 23, 24 räumlich voneinander getrennt. Aber auch im ersten Ausführungsbeispiel gemäß der Figur 2 fallen Steuerflächen und Verriegelungsflächen nicht zusammen, so wie dies beim Stand der Technik der Fall ist. Auch hier sind die Steuerflächen von den Verriegelungsflächen getrennt. Während die Steuerflächen mit dem Sperrelement 31 nur dann in Kontakt treten, wenn sich Letztgenanntes in seiner Ruheposition oder in der Nähe davon befindet, kommen die Verriegelungsflächen 13,14 bzw. 23, 24 nur dann mit dem Sperrelement 31 in Eingriff, wenn es sich in einer seiner Sperrpositionen befindet.

### Bezugszeichenliste

- 1: Schalteinrichtung

- 10: erste Schaltgabel
- 11: Bewegungsrichtung
- 12: Bewegungsrichtung
- 13: Verriegelungsfläche
- 14: Verriegelungsfläche
- 15: Blockierfläche
- 16: Steuerfläche
- 17: Nut

- 20: zweite Schaltgabel
- 21: Bewegungsrichtung
- 22: Bewegungsrichtung
- 23: Verriegelungsfläche
- 24: Verriegelungsfläche
- 25: Blockierfläche
- 26: Steuerfläche
- 27: Nut

- 30: Verriegelungsvorrichtung
- 31: Sperrelement
- 32: Abstützblock
- 33: Achse
- 34: Anlagefläche
- 35: Anlagefläche
- 36: Schenkelfeder
- 37: Schenkel
- 38: Schenkel
- 39: Aufnahme
- 40: mittlerer Bereich
- 41: Endbereich
- 42: Endbereich
- 43: Absatz
- 44: zweites Sperrelemente
- 45: Schraubenfeder
- 46: Teller

## Patentansprüche

1. Schalteinrichtung (1) für ein Mehrgang-Schaltgetriebe, umfassend:
eine erste bewegbare Schaltgabel (10) und wenigstens eine zweite bewegbare Schaltgabel (20), die zum Einlegen von Gängen (G1, G3, G5, G_Rück) des Schaltgetriebes dienen und jeweils eine Neutralstellung (N) sowie eine Schaltstellung einnehmen können, bei der ein der jeweiligen Schaltgabel (10, 20) zugeordneter Gang eingelegt ist,
eine Verriegelungsvorrichtung (30), die dazu dient, dass die Schaltgabeln (10, 20) unbeabsichtigt nicht gleichzeitig jeweils die Schaltstellung einnehmen, und die wenigstens ein erstes bewegbares Sperrelement (31) aufweist, das sich, wenn durch die zweite Schaltgabel (20) ein Gang eingelegt ist, in einer durch die zweite Schaltgabel (20) fixierte Sperrposition befindet, in der eine Anlagefläche (34) des ersten Sperrelementes (31) und eine Verriegelungsfläche (13, 14) der ersten Schaltgabel (10) zusammenwirken und **dadurch** die erste Schaltgabel (10) in Neutralstellung (N) gehalten wird, wobei
die Anlagefläche (34) des Sperrelementes (31) und die Verriegelungsfläche (13, 14) der ersten Schaltgabel (10) so ausgebildet sind, dass in Sperrposition eine Kraft zum Bewegen der ersten Schaltgabel (10) aus der Neutralposition (N) heraus keine resultierende Kraftkomponente aufweist, durch die das Sperrelement (31) gegen die zweite Schaltgabel (20) gedrückt wird,
**dadurch gekennzeichnet, dass**
sich das erste bewegbare Sperrelement (31) oder ein zweites Sperrelement (44) der Verriegelungsvorrichtung (30), wenn durch die erste Schaltgabel (10) ein anderer Gang eingelegt ist, in einer durch die erste Schaltgabel (10) fixierten Sperrposition befindet, in der eine weitere Anlagefläche (35) des ersten Sperrelementes (31) beziehungsweise eine Anlagefläche des zweiten Sperrelementes (44) und eine Verriegelungsfläche (23, 24) der zweiten Schaltgabel (20) zusammenwirken,
wobei die weitere Anlagefläche (35) des Sperrelementes (31) beziehungsweise die Anlagefläche des zweiten Sperrelementes (44) und die Verriegelungsfläche (23, 24) der zweiten Schaltgabel (20) so ausgebildet sind, dass in Sperrposition eine Kraft zum Bewegen der zweiten Schaltgabel (20) aus der Neutralposition (N) heraus keine resultierende Kraftkomponente aufweist, durch die das erste Sperrelement (31) beziehungsweise das zweite Sperrelement (44) gegen die erste Schaltgabel (10) gedrückt wird.

2. Schalteinrichtung (1) nach Anspruch 1, **dadurch gekennzeichnet, dass** ein Abstützblock (32) die Kräfte aufnimmt, die beim Aufbringen der Kraft zum Bewegen der ersten Schaltgabel (10) aus der Neutralposition (N) auf das erste Sperrelement (31) wirken.

3. Schalteinrichtung (1) nach Anspruch 1 oder 2, **dadurch gekennzeichnet, dass** eine Bewegungsrichtung (11, 12) der ersten Schaltgabel (10) und eine Bewegungsrichtung des ersten Sperrelementes (31) senkrecht zueinander verlaufen und dass die Anlagefläche (34) des ersten Sperrelementes (31) und die Verriegelungsfläche (13, 14) jeweils senkrecht zu der Bewegungsrichtung der ersten Schaltgabel (10) ausgebildet sind.

4. Schalteinrichtung (1) nach einem der Ansprüche 1 bis 3, **dadurch gekennzeichnet, dass** das Sperrelement (31) als Sperrbolzen ausgebildet ist, der mit einem Ende in eine Vertiefung (17) der ersten Schaltgabel (10) greift, wobei eine die Vertiefung (17) begrenzende Innenwand die Verriegelungsfläche (13, 14) ausbildet.

5. Schalteinrichtung (1) nach einem der Ansprüche 1 bis 4, **dadurch gekennzeichnet, dass** das erste Sperrelement (31) nicht fixiert ist, wenn sich die zweite Schaltgabel (20) in der Neutralstellung (N) befindet.

6. Schalteinrichtung (1) nach einem der Ansprüche 1 bis 5, **dadurch gekennzeichnet, dass** die Verriegelungsvorrichtung (30) Mittel (36, 45) aufweist, die das Sperrelement (31) von der Sperrposition in eine Ruheposition drücken.

7. Schalteinrichtung (1) nach Anspruch 6, **dadurch gekennzeichnet, dass** die zweite Schaltgabel (20) eine Steuerfläche (26) aufweist, an der das Sperrelement (31) in der Ruheposition anliegt, wenn die zweite Schaltgabel (20) sich aus der Neutralstellung (N) bewegt wird, wobei die Steuerfläche (26) eine Bewegung der zweiten Schaltgabel (20) in eine Bewegung des Sperrelementes (31) von der Ruheposition in die Sperrposition umwandelt.

8. Schalteinrichtung (1) nach einem der Ansprüche 1 bis 7, **dadurch gekennzeichnet, dass** die zweite Schaltgabel (20) eine Blockierfläche (25) aufweist, an der das Sperrelement (31) anliegt, wenn es sich in der Sperrposition befindet.

9. Schalteinrichtung (1) nach einem der Ansprüche 6 bis 8, **dadurch gekennzeichnet, dass** die Mittel wenigstens eine Feder (36, 45) umfassen.

10. Schalteinrichtung (1) nach Anspruch 9 11, **dadurch gekennzeichnet, dass** die Feder eine Schenkelfeder (36) mit zwei zueinander beabstandeten Schenkeln (37, 38) ist.

11. Schalteinrichtung (1) nach Anspruch 10, **dadurch gekennzeichnet, dass** die Schenkel (37, 38) eine offene Aufnahme (39) aufweisen, in die das Sperrelement einlegbar ist.

12. Schalteinrichtung (1) nach Anspruch 9, **dadurch gekennzeichnet, dass** die Feder eine Schraubenfeder (45) ist.

## Claims

1. Shift device (1) for a multiple gear gearbox, comprising:
a first movable shift fork (10) and at least one second movable shift fork (20) which serve for the engagement of gears (G1, G3, G5, G_reverse) of the gearbox and which can each assume a neutral position (N) and a shift position in which a gear assigned to the respective shift fork (10, 20) is engaged,
a locking device (30) which serves to ensure that the shift forks (10, 20) do not inadvertently each assume the shift position simultaneously and which has at least one first movable blocking element (31) which, when a gear is engaged by the second shift fork (20), is situated in a blocking position fixed by the second shift fork (20), in which blocking position a contact surface (34) of the first blocking element (31) interacts with a locking surface (13, 14) of the first shift fork (10) and, as a result, the first shift fork (10) is held in the neutral position (N), wherein
the contact surface (34) of the blocking element (31) and the locking surface (13, 14) of the first shift fork (10) are designed such that, in the blocking position, a force for moving the first shift fork (10) out of the neutral position (N) has no resultant force component which causes the blocking element (31) to be pushed against the second shift fork (20),
**characterized in that**,
when another gear is engaged by the first shift fork (10), the first movable blocking element (31) or a second blocking element (44) of the locking device (30) is situated in a blocking position fixed by the first shift fork (10), in which blocking position a further contact surface (35) of the first blocking element (31) or a contact surface of the second blocking element (44) interacts with a locking surface (23, 24) of the second shift fork (20), wherein the further contact surface (35) of the blocking element (31) or the contact surface of the second blocking element (44) and the locking surface (23, 24) of the second shift fork (20) are designed such that, in the blocking position, a force for moving the second shift fork (20) out of the neutral position (N) has no resultant force component which causes the first blocking element (31) or the second blocking element (44) to be pushed against the first shift fork (10).

2. Shift device (1) according to Claim 1, **characterized in that** a support block (32) absorbs the forces which act on the first blocking element (31) when the force for moving the first shift fork (10) out of the neutral position (N) is applied.

3. Shift device (1) according to Claim 1 or 2, **characterized in that** a movement direction (11, 12) of the first shift fork (10) and a movement direction of the first blocking element (31) run perpendicular to one another, and **in that** the contact surface (34) of the first blocking element (31) and the locking surface (13, 14) are formed in each case perpendicular to the movement direction of the first shift fork (10).

4. Shift device (1) according to one of Claims 1 to 3, **characterized in that** the blocking element (31) is designed as a blocking pin which engages with one end into a depression (17) of the first shift fork (10), wherein an inner wall which delimits the depression (17) forms the locking surface (13, 14).

5. Shift device (1) according to one of Claims 1 to 4, **characterized in that** the first blocking element (31) is not fixed when the second shift fork (20) is situated in the neutral position (N).

6. Shift device (1) according to one of Claims 1 to 5, **characterized in that** the locking device (30) has means (36, 45) which push the blocking element (31) from the blocking position into a rest position.

7. Shift device (1) according to Claim 6, **characterized in that** the second shift fork (20) has a control surface (26) against which the blocking element (31) bears, in the rest position, when the second shift fork (20) is moved out of the neutral position (N), wherein the control surface (26) converts a movement of the second shift fork (20) into a movement of the blocking element (31) from the rest position into the blocking position.

8. Shift device (1) according to one of Claims 1 to 7, **characterized in that** the second shift fork (20) has a blocking surface (25) against which the blocking element (31) bears when it is in the blocking position.

9. Shift device (1) according to one of Claims 6 to 8, **characterized in that** the means comprise at least one spring (36, 45).

10. Shift device (1) according to Claim 9, **characterized in that** the spring is a leg spring (36) with two legs (37, 38) spaced apart from one another.

11. Shift device (1) according to Claim 10, **characterized in that** the legs (37, 38) have an open receptacle (39) into which the blocking element can be placed.

12. Shift device (1) according to Claim 9, **characterized in that** the spring is a helical spring (45).

## Revendications

1. Dispositif de commutation (1) pour une boîte de vitesse à plusieurs rapports, comprenant :
une première fourchette de changement de vitesse déplaçable (10) et au moins une deuxième fourchette de changement de vitesse déplaçable (20), qui servent à l'enclenchement de rapports (G1, G3, G5, G_Rück) de la boîte de vitesse et qui peuvent adopter à chaque fois une position neutre (N) ainsi qu'une position de commutation, dans laquelle un rapport associé à la fourchette de changement de vitesse respective (10, 20) est enclenché,
un dispositif de verrouillage (30) qui fait en sorte que les fourchettes de changement de vitesse (10, 20) n'adoptent pas accidentellement simultanément la position de commutation, et qui présente au moins un premier élément de blocage déplaçable (31), qui, lorsqu'un rapport est enclenché par la deuxième fourchette de changement de vitesse (20), se trouve dans une position de blocage fixée par la deuxième fourchette de changement de vitesse (20), dans laquelle une surface d'appui (34) du premier élément de blocage (31) et une surface de verrouillage (13, 14) de la première fourchette de changement de vitesse (10) coopèrent, et permettent ainsi de maintenir la première fourchette de changement de vitesse (10) dans la position neutre (N),
la surface d'appui (34) de l'élément de blocage (31) et la surface de verrouillage (13, 14) de la première fourchette de changement de vitesse (10) étant réalisées de telle sorte que dans la position de blocage une force servant à déplacer la première fourchette de changement de vitesse (10) hors de la position neutre (N) ne présente aucune composante de force résultante qui permette de presser l'élément de blocage (31) contre la deuxième fourchette de changement de vitesse (20),
**caractérisé en ce que**
le premier élément de blocage déplaçable (31) ou un deuxième élément de blocage (44) du dispositif de verrouillage (30), lorsqu'un autre rapport est enclenché par la première fourchette de changement de vitesse (10), se trouve dans une position de blocage fixée par la première fourchette de changement de vitesse (10), dans laquelle une autre surface d'appui (35) du premier élément de blocage (31), ou une surface d'appui du deuxième élément de blocage (44) et une surface de verrouillage (23, 24) de la deuxième fourchette de changement de vitesse (20) coopèrent, l'autre surface d'appui (35) de l'élément de blocage (31) ou la surface d'appui du deuxième élément de blocage (44) et la surface de verrouillage (23, 24) de la deuxième fourchette de changement de vitesse (20) étant réalisées de telle sorte que dans la position de blocage une force pour déplacer la deuxième fourchette de changement de vitesse (20) hors de la position neutre (N) ne présente aucune composante de force résultante qui permette de presser le premier élément de blocage (31) ou le deuxième élément de blocage (44) contre la première fourchette de changement de vitesse (10).

2. Dispositif de commutation (1) selon la revendication 1, **caractérisé en ce qu'**un bloc d'appui (32) reçoit les forces qui agissent lors de l'application de la force pour déplacer la première fourchette de changement de vitesse (10) hors de la position neutre (N) sur le premier élément de blocage (31).

3. Dispositif de commutation (1) selon la revendication 1 ou 2, **caractérisé en ce qu'**une direction de déplacement (11, 12) de la première fourchette de changement de vitesse (10) et une direction de déplacement du premier élément de blocage (31) s'étendent perpendiculairement l'une à l'autre, et **en ce que** la surface d'appui (34) du premier élément de blocage (31) et la surface de verrouillage (13, 14) sont réalisées à chaque fois perpendiculairement à la direction de déplacement de la première fourchette de changement de vitesse (10).

4. Dispositif de commutation (1) selon l'une quelconque des revendications 1 à 3, **caractérisé en ce que** l'élément de blocage (31) est réalisé sous forme de boulon de blocage, dont une extrémité vient en prise dans un renfoncement (17) de la première fourchette de changement de vitesse (10), une paroi intérieure limitant le renfoncement (17) constituant la surface de verrouillage (13, 14).

5. Dispositif de commutation (1) selon l'une quelconque des revendications 1 à 4, **caractérisé en ce que** le premier élément de verrouillage (31) n'est pas fixé, lorsque la deuxième fourchette de changement de vitesse (20) se trouve dans la position neutre (N).

6. Dispositif de commutation (1) selon l'une quelconque des revendications 1 à 5, **caractérisé en ce que** le dispositif de verrouillage (30) présente des moyens (36, 45) qui pressent l'élément de blocage (31) de la position de blocage dans une position de repos.

7. Dispositif de commutation (1) selon la revendication 6, **caractérisé en ce que** la deuxième fourchette de changement de vitesse (20) présente une surface de commande (26) contre laquelle s'applique l'élément de blocage (31) dans la position de repos, lorsque la deuxième fourchette de changement de vitesse (20) s'est déplacée hors de la position neutre (N), la surface de commande (26) convertissant un mouvement de la deuxième fourchette de changement de vitesse (20) en un mouvement de l'élément de blocage (31) de la position de repos dans la position de blocage.

8. Dispositif de commutation (1) selon l'une quelconque des revendications 1 à 7, **caractérisé en ce que** la deuxième fourchette de changement de vitesse (20) présente une surface de blocage (25) contre laquelle s'applique l'élément de blocage (31) lorsqu'il se trouve dans la position de blocage.

9. Dispositif de commutation (1) selon l'une quelconque des revendications 6 à 8, **caractérisé en ce que** les moyens comprennent au moins un ressort (36, 45).

10. Dispositif de commutation (1) selon la revendication 9, **caractérisé en ce que** le ressort est un ressort à branches (36) avec deux branches (37, 38) espacées l'une de l'autre.

11. Dispositif de commutation (1) selon la revendication 10, **caractérisé en ce que** les branches (37, 38) présentent un logement ouvert (39), dans lequel l'élément de blocage peut être inséré.

12. Dispositif de commutation (1) selon la revendication 9, **caractérisé en ce que** le ressort est un ressort à boudin (45).
